# EUROPEAN PATENT SPECIFICATION

(11) **EP 0 820 138 B1**
(45) Date of publication and mention of the grant of the patent: **27.09.2006**
(21) Application number: 97401649.5
(22) Date of filing: 09.07.1997
(51) Int. Cl.: H02J 7/10

(54) **Charging apparatus**
Ladegerät
Chargeur

(30) Priority: 16.07.1996 JP 20414196
(43) Date of publication of application: 21.01.1998
(73) Proprietor: SONY CORPORATION, Tokyo (JP)
(72) Inventor: Umetsu, Koji, Shinagawa-ku, Tokyo (JP)
(74) Representative: Thévenet, Jean-Bruno

(56) References cited:
- EP-A- 0 847 123
- JP-A- 8 070 536
- US-A- 5 237 259
- US-A- 5 408 170
- US-A- 5 442 274
- US-A- 5 726 554

## Description

### Description of the Related Art

In a charging apparatus which is used for charging a secondary battery such as a lithium battery or the like, a constant current charge and a constant voltage charge are generally performed. That is, when a battery voltage of the secondary battery is equal to or less than a set voltage of the charging, the battery is charged by a constant charge current and the battery voltage is raised. When the battery voltage reaches the set voltage, the charge current decreases and the battery is charged by a constant charge voltage.

A charging apparatus 10 using such a charging system has a construction as shown in, for example, Fig. 1. Fig. 2 shows a relation (output characteristics of the charging apparatus) between a charge voltage V and a charge current I. Fig. 3 shows relations (charging characteristics curves) among the charge voltage V, the charge current I, and a charging time T.

In the charging apparatus 10, a secondary battery 11 and a current detecting resistor 12 are serially connected to a power source 13. That is, a positive terminal of the secondary battery 11 is connected to a positive terminal of the power source 13, a negative terminal of the secondary battery 11 is connected to one end of the current detecting resistor 12, and the other end of the current detecting resistor 12 is connected to a negative terminal of the power source 13. Positive and negative input terminals of a comparator 14 are connected to the respective ends of the current detecting resistor 12. An output terminal of the comparator 14 is connected to a charge control unit 15. The charge control unit 15 and a display unit 16 are connected.

In such a construction, at the last stage of the charging of the secondary battery 11, after the charging by a constant current Ibl has finished, the charging by a constant voltage Vbl is started, so that the charge current I decreases. Therefore, the charge current I is detected by the current detecting resistor 12, the comparator 14 compares the detected charge current I with a current set by a reference voltage El and outputs a detection signal to the charge control unit 15. When the detection signal is at the high level, the charge control unit 15 determines that the charging continues and allows the display unit 16 to display that the battery is being charged. When the detection signal is at the low level, the charge control unit 15 determines the charging is finished, and allows the display unit 16 to display the end of charge.

As for the charging time in a range from the start of charge to the end of charge in the conventional charging apparatus 10, now assuming that a time which is required to charge by the constant current is set to t, a time which is required to charge by the constant voltage is equal to 3t, so that a time of 4t is required. Particularly, the constant voltage charging time is determined by an impedance in the secondary battery. In order to reduce the charging time, therefore, it is a necessary to increase the charge current of the constant current charge. There is, consequently, not only a problem that the constant voltage charging time which occupies 3/4 of the charging time cannot be reduced but also a problem that an expensive apparatus of a high output (high electric power) is required.

US-A-5 237 259 describes a system for charging a secondary battery, in which the battery is initially charged using a constant charging current until the battery voltage reaches a predetermined level then the charging changes over to a phase in which the charging voltage is held constant until a predetermined time period has elapsed.

US-A-5 617 007 describes a system for charging a battery, in which the battery is initially charged using a constant charging current until the battery voltage reaches a predetermined level then the charging changes over to a pulsed-charging phase in which charging pulses of stepwise-reducing current are applied to the battery. During the pulsed charging phase the voltage is not directly controlled; instead the charging current is controlled so that each successive charging pulse has a current 90% that of the current in the preceding charging pulse, in order to ensure stability of the charging process. Charging is considered to be complete when the charging current reduces to a particular value.

EP-A-0 847 123 which is a prior art according to Art 54(3) EPC (published after the filing date of the present application) describes a system in which a battery is initially charged at constant current but, after the average battery voltage reaches a predetermined level, the charging process changes over to a pulsed-charging phase in which the voltage of the charging pulses is held constant but the duty ratio of the pulses is varied. Charging is considered to be complete when the duty ratio of the pulses has decreased to a predetermined value.

### OBJECT AND SUMMARY OF THE INVENTION

The invention is made to solve the above problems and it is an object of the invention to provide a cheap charging apparatus which can charge in a short time.

The invention is defined by the features of the independent claims. Preferred embodiments are defined in the dependent claims.

According to the above construction, only when the charge current is not shut off, namely, only during the charging, the voltage is switched to the voltage higher than the output voltage of the power source and the charging is performed, so that the constant voltage charging time which usually would occupy 3/4 of the charging time can be reduced.

The above and other objects and features of the present invention will become apparent from the following detailed description and the appended claims with reference to the accompanying drawings.

### BRIEF DESCRIPTION OF THE DRAWINGS

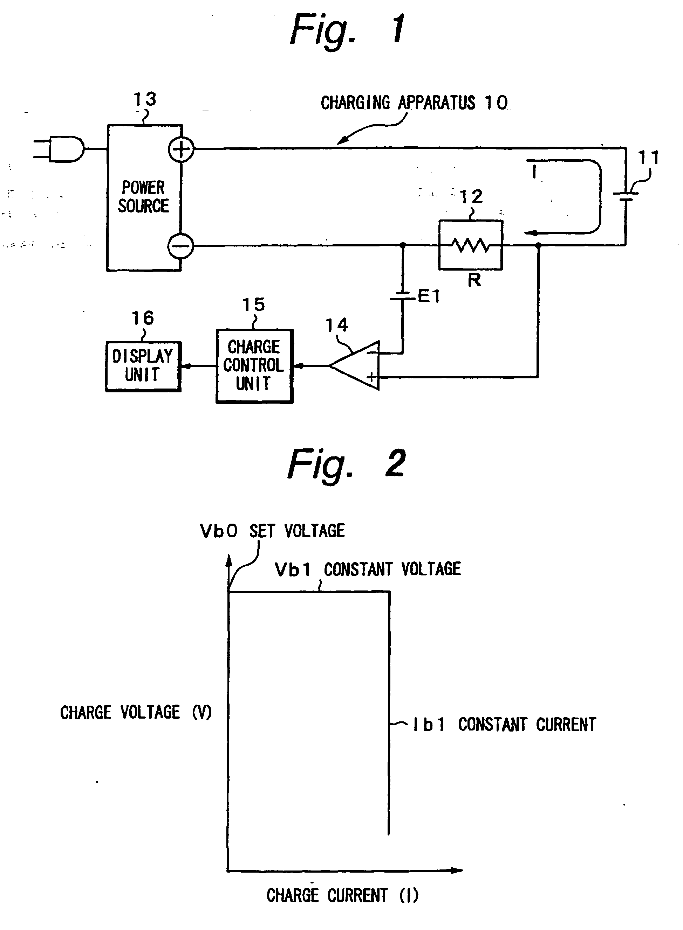

Fig. 1 is a constructional diagram showing an example of a conventional charging apparatus;
Fig. 2 is a diagram showing a general relation (output characteristics of the charging apparatus) between an output voltage and a charge current in the Fig. 1 apparatus;

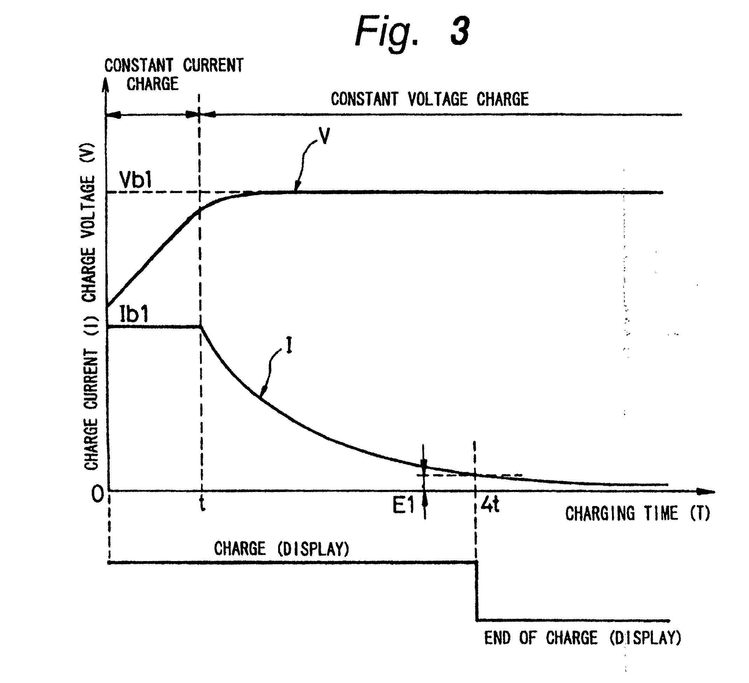

Fig. 3 is a diagram showing relations (charging characteristics curves) among the charge voltage/current and the like and a charging time of the charging apparatus shown in Fig. 1;

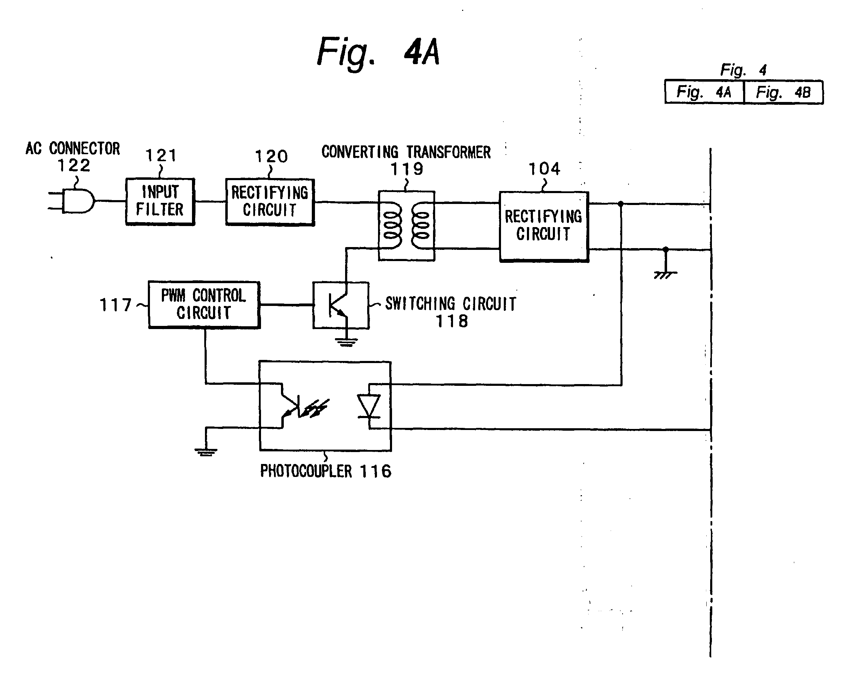

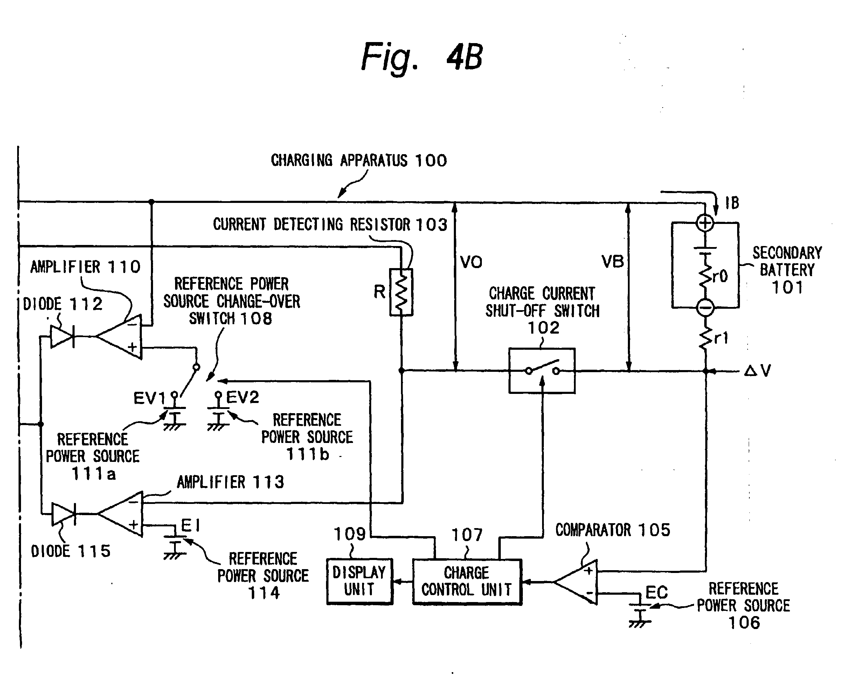

Figs. 4A and 4B are constructional diagrams showing an embodiment of a charging apparatus of the invention;

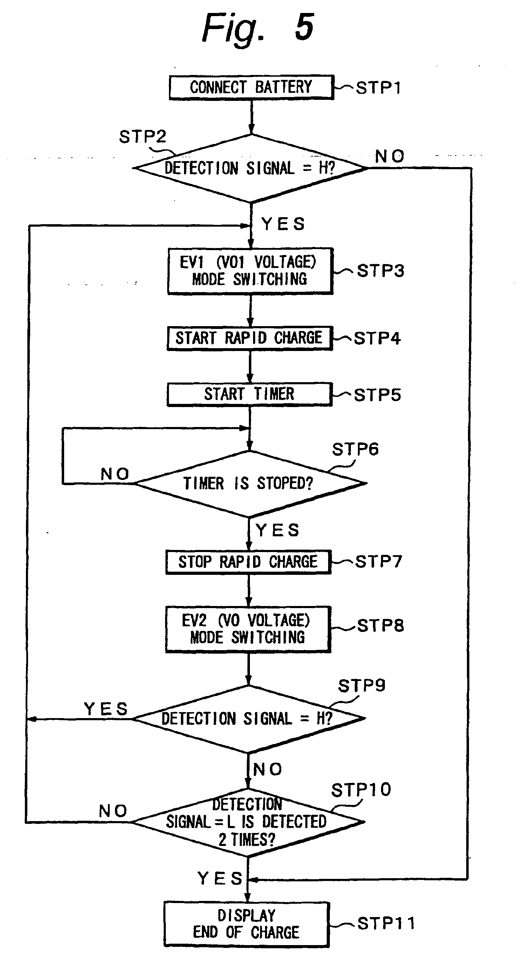

Fig. 5 is a flowchart for explaining an operation example of the charging apparatus shown in Figs. 4A and 4B;

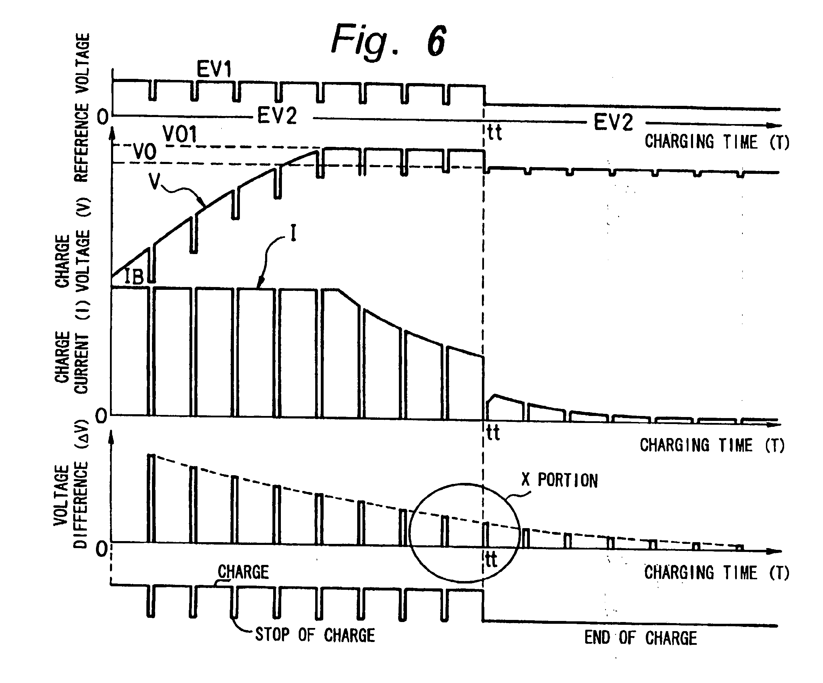

Fig. 6 is a first diagram showing relations (charging characteristics curves) among charge voltage/current and the like and a charging time of the charging apparatus shown in Figs. 4A and 4B;

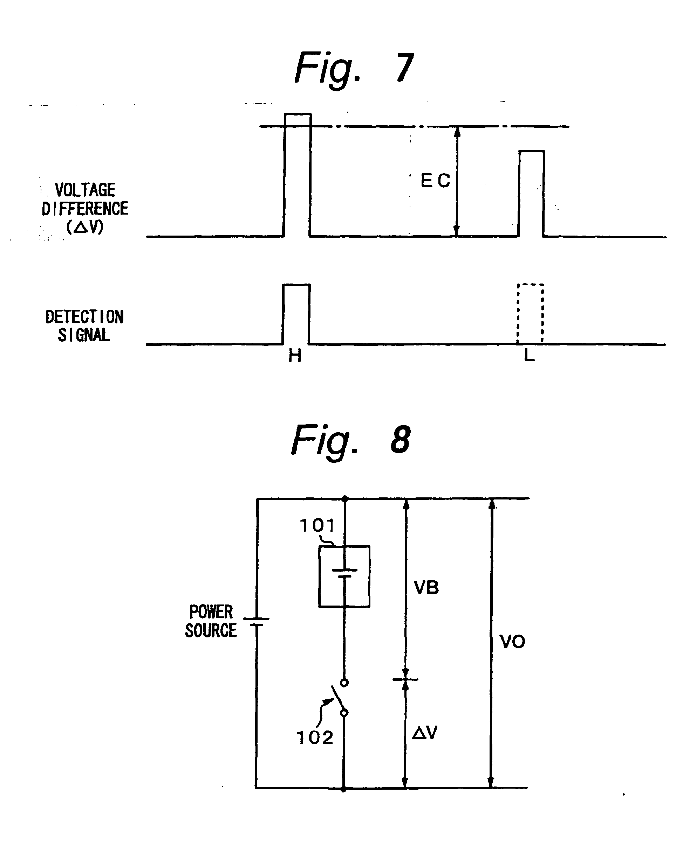

Fig. 7 is an enlarged diagram of an X portion shown in Fig. 6;

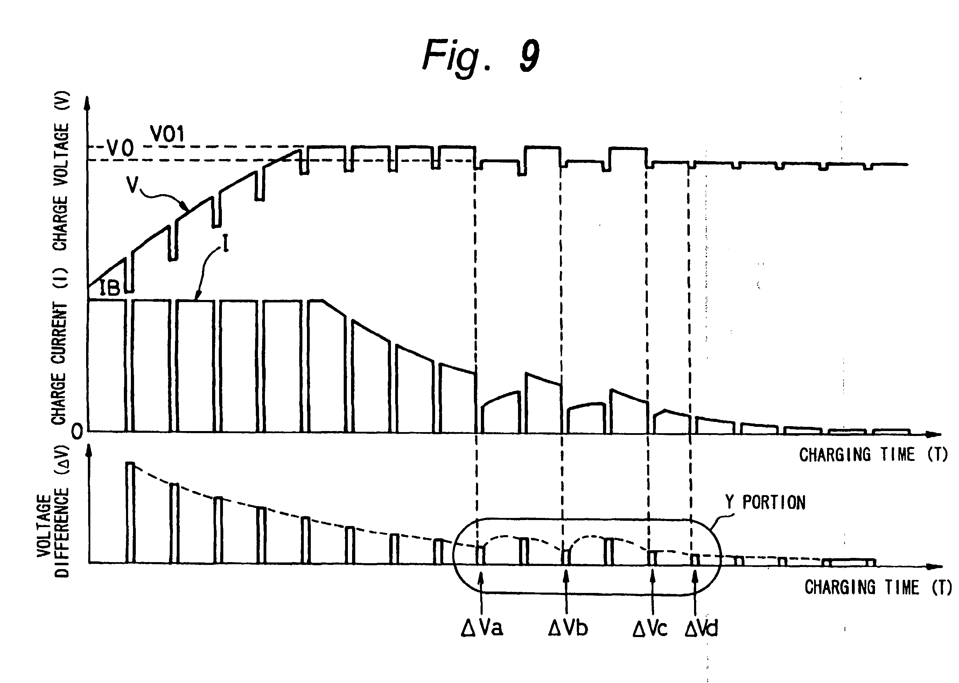

Fig. 8 is a diagram showing a voltage section of the charging apparatus shown in Figs. 4A and 4B;
Fig. 9 is a second diagram showing relations (charging characteristics curves) among the charge voltage/current and the like and the charging time of the charging apparatus shown in Figs. 4A and 4B;

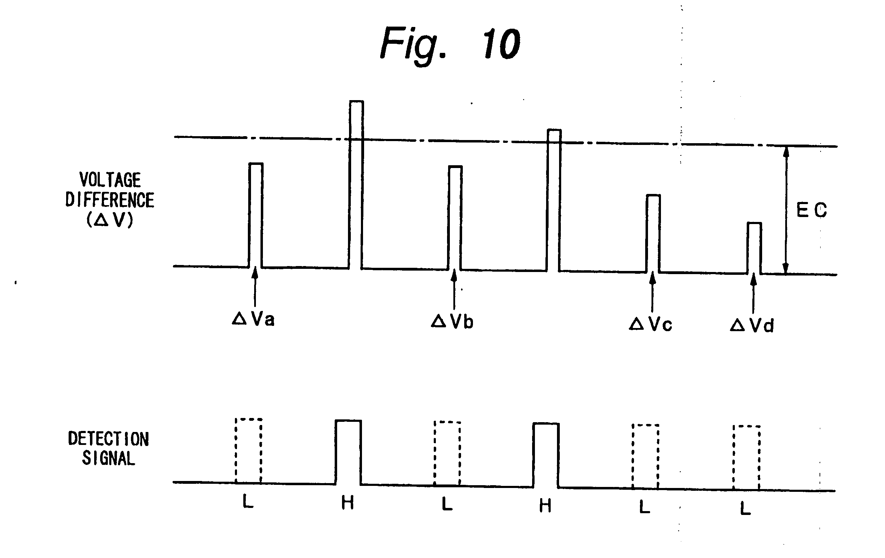

Fig. 10 is an enlarged diagram of a Y portion shown in Fig. 9;

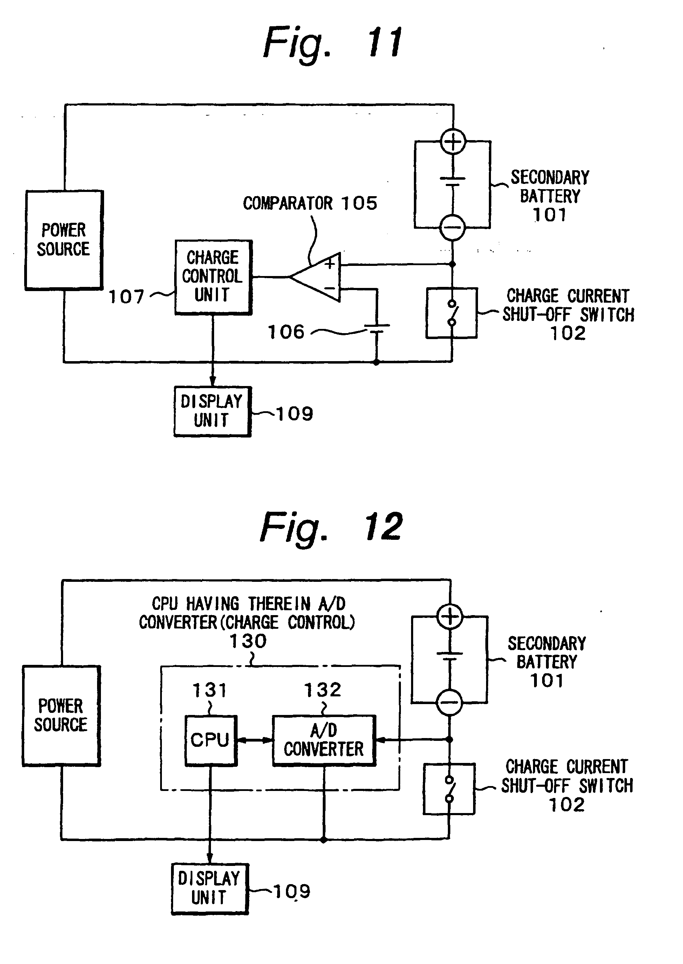

Fig. 11 is a constructional diagram showing a construction in which portions other than a main portion of the charging apparatus shown in Figs. 4A and 4B are simplified; and
Fig. 12 is a constructional diagram showing another embodiment of a charging apparatus of the invention.

### DETAILED DESCRIPTION OF THE PREFERRED EMBODIMENTS

Preferred embodiments of the invention will now be described in detail hereinbelow with reference to the drawings.

Since the embodiments which will be described hereinbelow are the preferred embodiments of the invention, various limitations which are technically preferred are added. However, the scope of the invention is not limited to these embodiments so long as there is no disclosure in the following description indicating that the invention is particularly limited.

Figs. 4A and 4B are constructional diagrams showing the embodiment of a charging apparatus 100 of the invention.

In the charging apparatus 100, a secondary battery 101, a charge current shut-off switch 102, and a current detecting resistor 103 are serially connected to a rectifying circuit 104. That is, a positive terminal of the secondary battery 101 is connected to the rectifying circuit 104, a negative terminal of the secondary battery 101 is connected to one end of the charge current shut-off switch 102, the other end of the charge current shut-off switch 102 is connected to one end of the current detecting resistor 103, and the other end of the current detecting resistor 103 is connected to the rectifying circuit 104. Further, the negative terminal of the secondary battery 101 is connected to a positive input terminal of a comparator 105. A positive terminal of a reference power source 106 is connected to a negative input terminal of the comparator 105. An output terminal of the comparator 105 is connected to a charge control unit 107. The charge current shut-off switch 102, a reference power source change-over switch 108, and a display unit 109 are connected to the charge control unit 107.

A connecting line portion between the positive terminal of the secondary battery 101 and the rectifying circuit 104 is connected to a negative input terminal of an amplifier 110. A terminal of the reference power source change-over switch 108 for switching reference power sources 111a and 111b is connected to a positive input terminal of the amplifier 110. An output terminal of the amplifier 110 is connected to a diode 112.

A connecting line portion between the charge current shut-off switch 102 and current detecting resistor 103 is connected to a negative input terminal of an amplifier 113. A positive terminal of a reference power source 114 is connected to the positive input terminal of the amplifier 113. An output terminal of the amplifier 113 is connected to a diode 115.

A connecting line portion between the diodes 112 and 115 and a connecting line portion between the positive terminal of the secondary battery 101 and the rectifying circuit 104 are connected to a photocoupler 116. The photocoupler 116, a PWM control circuit 117, and a switching circuit 118 are serially connected.

A rectifying circuit 120 and an input filter 121 are serially connected to one terminal on the primary side of a converting transformer 119. The switching circuit 118 is connected to the other terminal on the primary side. The rectifying circuit 104 is connected to the secondary side of the converting transformer 119.

A method of reducing a charging time by the charging apparatus 100 of the embodiment of the invention will now be described. Since the output voltage of the power source 13 is always constant in the conventional charging apparatus 10, when a charging mode enters a constant voltage charging after completion of a constant current charging, a decrease in charge current occurs.

The decrease in the charge current is determined by an internal voltage of the secondary battery 11, an internal resistance of the secondary battery 11, and a wiring resistance between the secondary battery 11 and charging apparatus 10. If the decrease in the charge current also occurs even in the charging apparatus 100 of the embodiment of the invention, for example, assuming that an internal resistance r0 of the secondary battery 101 is equal to 0.3Ω and a wiring resistance r1 between the secondary battery 101 and charging apparatus 100 is equal to 0.1Ω, a total resistance r = r0 + r1 is equal to 0.4Ω. Assuming that a charge current IB is set to 1A, a voltage drop Vr = r•IB is equal to 0.4V. The voltage drop Vr also exerts an influence on the charge current IB to the secondary battery 101.

Assuming that the battery voltage is, for example, equal to 8.4V, a lithium battery serving as a secondary battery 101 enters a full charging state by limitlessly charging to 8.4V by a battery releasing voltage VB. Therefore, as the internal resistance r0 of the secondary battery 101 and the wiring resistance r1 between the secondary battery 101 and charging apparatus 100 are smaller, the charging time can be reduced.

As mentioned above, in the charging apparatus 100 of the embodiment of the invention, although the charging and the stop of the charging are repeated at predetermined periods, the battery is charged by, for example, a charge voltage V01 higher than 8.4V, for instance, 8.7V during the charging, and the voltage is returned to the output voltage V0 of the power source, for example, 8.4V during the stop of the charging, thereby reducing the whole charging time.

For the construction as mentioned above, an operation example will now be explained with reference to a flowchart of Fig. 5, a diagram of Fig. 6 showing relations (charging characteristics curves) among a voltage EV1 or EV2 of the reference power source 111a or 111b, the charge voltage V, the charge current I, a voltage difference ΔV, and the charging time T, an enlarged diagram of an X portion of Fig. 6 shown in Fig. 7, and a diagram in Fig. 8 showing a voltage section of the apparatus.

The secondary battery 101 is first connected (Step STP1), an AC connector 122 is connected to an A/C power source (100 ACV), and an electric power is supplied to the primary side of the converting transformer 119 through the input filter 121 and rectifying circuit 120. The switching circuit 118 switches the converting transformer 119 by a method which will be explained in detail below, converts electric power from the primary side to the secondary side, and supplies the converted power to the secondary battery 101 through the rectifying circuit 104.

The comparator 105 compares the voltage difference ΔV between the output voltage V0 of the power source at the time of no-load that is inputted to a positive input terminal when the charge current is shut off and the releasing battery voltage VB, namely, the negative terminal voltage of the secondary battery 101 with a reference voltage EC of the reference power source 106 that is inputted to the negative input terminal and outputs a detection signal to the charge control unit 107.

When the detection signal is at the low level, the charge control unit 107 determines that the charging is finished, allows the display unit 109 to display the end of charge, and finishes the charging operation (steps STP2, STP11).

When the detection signal is at the high level, the charge control unit 107 determines that the charging operation is continued, switches the reference power source change-over switch 108 to the reference power source 111a side, namely, to the charge voltage EV1 higher than the output voltage V0 of the power source, and allows the display unit 109 to display that the charging operation is being performed (steps STP2, STP3).

The amplifier 110 compares the voltage V0 that is supplied to the secondary battery 101 with the voltage EV1 of the reference power source 111a. The amplifier 113 compares the charge current IB flowing in the secondary battery 101 detected by the current detecting resistor 103 with a current which is set by the voltage EI of the reference power source 114. The photocoupler 116 converts the output of the amplifiers 110 and 113 added by the diodes 112 and 115 from the secondary side to the primary side and outputs the converted output to the PWM control circuit 117. On the basis of a voltage/current control signal from the photocoupler 116, the PWM control circuit 117 controls an on-period of the switching circuit 118 in a manner such that the output voltage and the charge current are equal to predetermined set values, namely, the voltage (output V01 of the power source)/current which are set by the voltage EV1 of the reference power source 111a and the voltage EI of the reference power source 114. Thus, constant voltage/constant current output characteristics can be derived.

The charge control unit 107 starts the rapid charge and starts a timer (steps STP4, STP5). When the timer stops, the rapid charge is stopped (steps STP6, STP7). That is, the charge control unit 107 controls the on/off operations of the charge current shut-off switch 102 at a predetermined period or an arbitrary period after the start of the rapid charge. For example, the operations such that the charge current shut-off switch 102 is turned on only for three minutes after the start of the rapid charge, the charge current is supplied, the charge current shut-off switch 102 is turned off for only a period of a few seconds to tens of seconds after the elapse of three minutes, and the charge current is shut off, are repeated.

In the charge stop period of time, the charge control unit 107 switches the reference power source change-over switch 108 to the reference power source 111b side, namely, to the same charge voltage EV2 as the output voltage V0 of the power source (step STP8).

The amplifier 110 compares the voltage V0 which is supplied to the secondary battery 101 with the voltage EV2 of the reference power source 111b and supplies an output signal to the PWM control circuit 117 via the photocoupler 116 so as to control to the power output voltage V0. The PWM control circuit 117 controls the on period of the switching circuit 118. Thus, the output voltage of the power source is set to V0.

The comparator 105 compares the voltage difference ΔV between the output voltage V0 of the power source at the time of no-load that is inputted to the positive input terminal when the charge current is shut off and the releasing battery voltage VB, namely, the negative terminal voltage of the secondary battery 101 with the reference voltage EC of the reference power source 106 which is inputted to the negative input terminal and outputs a detection signal to the charge control unit 107.

When the detection signal is at the high level, the charge control unit 107 determines that the charging operation is to be continued, the processing routine is returned to step STP3, and the foregoing processes are repeated (step STP9).

When the detection signal is at the low level, the charge control unit 107 can also decide that the charging operation is finished. However, after the voltage difference ΔV at which the detection signal is set to the low level was detected, there is a case of occurrence of the following problems. For example, as shown in the diagram indicative of charging characteristics curves in Fig. 9 and an enlarged diagram of a Y portion in Fig. 10, after a voltage difference ΔVa or ΔVb in which the detection signal of the first time is set to the low level was detected, when the reference voltage is changed from EV1 (V01 voltage) to EV2 (V0 voltage) and the charging operation is continued, there is a case where the charge current I and voltage difference ΔV which have continuously been being decreased rise once.

In the case where such a phenomenon occurs, if the end of charge is discriminated by the detection of a voltage difference ΔVa or ΔVb at which the detection signal of the first time is set to the low level, it results in an erroneous discrimination. Therefore, if the voltage difference ΔV at which the detection signal is set to the low level is continuously detected at least twice, namely, voltage differences ΔVc and ΔVd at which the detection signal is set to the low level are detected and, after that, the end of charge is discriminated, the end of charge can be certainly discriminated.

As a specific operation example, the charge control unit 107 detects the detection signal at the low level of the first time (step STP9). Subsequently, a check is made to see if the detection signal at the low level has continuously been detected twice (step STP10). As discriminating means here, for example, when the detection signal of the first time is set to the low level, a detection counter is set to "1" and, when the detection signal of the second time is set to the high level, the detection counter is reset to "0". Thus, only when the detection signal at the low level is detected twice successively, the detection counter is set to "2", so that such a discrimination can be performed.

In step STP10, if the detection of the detection signal at the low level is still the detection of the first time, the processing routine is returned to step STP3. The charge voltage is switched to EV1 (V01) and the charge is again performed.

In step STP10, when the detection of the detection signal at the low level is performed twice successively, the end of charge is displayed (step STP11). In this instance, as for an output of the power source, by continuously applying the charge voltage EV2 (V0), the charging operation is performed.

In the above embodiment, although the detection of the detection signal at the low level is continuously performed twice, the invention is not limited to such a method. It is sufficient to detect at least twice or two or more times.

The output of the detection signal of the comparator 105 is valid only for the shut-off period of the charge current I and it is determined that the detection is invalid for a period of time other than the shut-off period. Therefore, in dependence on the circuit setting, the output of the detection signal for a period of time during which the charge current I is not shut off is at the high or low level.

As mentioned above, according to the charging apparatus 100, although the constant current charging time is elongated, the constant voltage charging time is contrarily reduced. Therefore, for example, in case of the secondary battery 101 of 1200 mAH, although the conventional charging time 4t of 90 minutes was required, a charging time tt in the embodiment of the invention can be reduced to almost the half time, namely, to about 50 minutes.

Fig. 11 is a constructional diagram showing a construction in which portions other than the main section of the charging apparatus 100 in the embodiment are simplified. Although the voltage difference ΔV is set to, for instance, 80 mV, since it is a level at which there is particularly no problem even in consideration of about 5 mV as a variation of an offset voltage, a general-use IC can be used as a comparator 105 to detect the voltage difference ΔV of 80 mV. Since the charge control unit 107 doesn't detect the analog voltage of a high precision, for example, a cheap IC of 1kROM such as logic circuit, one-chip microcomputer, or the like can be used. The charging apparatus 100, therefore, can use a general comparator to detect the voltage. A general microcomputer can be used to control the charging operation. Thus, the costs of the apparatus itself can be reduced.

The detecting means of the voltage difference is not limited to the comparator 105 but, as shown in Fig. 12, it is also possible to construct in a manner such that a CPU 130 having therein an A/D converter in which an A/D converter 132 is provided for a CPU (microcomputer) 131 is used in place of the comparator 105 and the voltage difference ΔV is detected by the A/D converter 132.

As described above, according to the invention, since the construction is simple, the product costs can be reduced. The charging can be performed in a short time and the charging can be certainly finished, so that the reliability can be raised.

The present invention is not limited to the foregoing embodiments but many modifications and variations are possible within the scope of the invention as defined in the appended claims.

## Claims

1. A charging apparatus (100) for controlling a charging process in a manner such that a secondary battery (101) is initially charged using a constant current and using a charge voltage less than or equal to a first voltage and, when the terminal voltage of said secondary battery rises to said first voltage, the secondary battery is charged using a constant voltage and using a charge current less than or equal to said constant current, the charging apparatus comprising:
switching means (102) for periodically shutting off the charge current;
**characterised in that** there is provided comparing means (105) for comparing a voltage difference (ΔV) with a reference voltage (EC), said voltage difference (ΔV) being the difference between an output voltage (V0) of a power source when the charge current is shut off and a secondary battery voltage (VB) ; and
control means (107, 108) for switching the charge voltage to a voltage (V01) higher than the output voltage (V0) of said power source when said charge current is supplied, switching the charge voltage to a voltage (V0) equal to the output voltage (V0) of the power source when said charge current is shut off, and switching the charge voltage to a voltage (V0) equal to the output voltage (V0) of the power source when the charging is finished, in accordance with an output of the comparing means (105).

2. An apparatus according to claim 1, wherein said control means (107) finishes the charging process after the output of the comparing means indicates completion of the charging process at least two times.

3. A method of controlling charging of a secondary battery (101), the method comprising the steps of:
Initially charging the secondary battery using a constant current and using a charge voltage less than or equal to a first voltage and, when the terminal voltage of said secondary battery rises to said first voltage, charging the secondary battery using a constant voltage and using a charge current less than or equal to said constant current,
wherein the charging is periodically stopped;
**characterised in that**:
when the charging is stopped, a voltage difference (ΔV) is compared with a reference voltage (EC), said voltage difference (ΔV) being the difference between an output voltage (V0) of a power source when the charging is stopped and a secondary battery voltage (VB),
upon charging, a charge voltage is switched to a voltage (V01) higher than the output voltage (V0) of the power source, and
after completion of charging has been determined, based on the result of said comparison, the charging voltage is switched to said output voltage (V0) of the power source.

4. A charging method according to claim 3, wherein the charging is finished after a comparison result indicative of completion of the charging process is detected at least two times.

## Patentansprüche

1. Ladevorrichtung (100) zur Steuerung eines Ladeprozesses dergestalt, dass ein Akkumulator (101) anfangs mit Konstantstrom geladen und eine Ladespannung verwendet wird, die kleiner oder gleich einer ersten Spannung ist, wobei wenn die Klemmenspannung des Akkumulators auf die erste Spannung steigt, der Akkumulator mit einer Konstantspannung geladen wird und ein Ladestrom verwendet wird, der kleiner oder gleich dem Konstantstrom ist, wobei die Ladevorrichtung umfasst:
Schalteinrichtung (102) zum periodischen Abschalten des Ladestroms;
**dadurch gekennzeichnet, dass**
eine Vergleichseinrichtung (105) zum Vergleich einer Spannungsdifferenz (DV) mit einer Referenzspannung (EC) vorgesehen ist, wobei die Spannungsdifferenz (DV) die Differenz zwischen einer Ausgangspannung (V0) einer Stromquelle, wenn der Ladestrom ausgeschaltet ist, und einer Akkumulatorspannung (VB) ist; und
eine Steuereinrichtung (107, 108) zum Umschalten der Ladespannung auf eine Spannung (V01), die höher ist als die Ausgangsspannung (V0) der Stromquelle, wenn der Ladestrom bereitgestellt ist, wobei die Ladespannung auf eine Spannung (V0) umgeschaltet wird, die gleich der Ausgangsspannung (V0) der Stromquelle ist, wenn der Ladestrom ausgeschaltet ist, und wobei die Ladespannung auf eine Spannung (V0) umgeschaltet wird, die gleich der Ausgangsspannung (V0) der Stromquelle ist, wenn das Laden abgeschlossen ist, gemäß einem Ausgangssignal der Vergleichseinrichtung (105).

2. Vorrichtung gemäß Anspruch 1, wobei die Steuereinrichtung (107) den Ladeprozess beendet, nachdem das Ausgangssignal der Vergleichseinrichtung mindestens zweimal die Beendigung des Ladeprozesses anzeigt.

3. Verfahren zur Steuerung des Ladevorgangs eines Akkumulators (101), wobei das Verfahren die Schritte umfasst:
Anfängliches Laden des Akkumulators mit einem Konstantstrom und mit einer Ladespannung, die kleiner oder gleich einer ersten Spannung ist, wobei wenn die Klemmenspannung des Akkumulators auf die erste Spannung steigt, der Akkumulator mit einer konstanten Spannung geladen wird und ein Ladestrom verwendet wird, der kleiner oder gleich dem Konstantstrom ist,
wobei der Ladevorgang periodisch angehalten wird;
**dadurch gekennzeichnet dass**:
wenn der Ladevorgang angehalten wird, eine Spannungsdifferenz (DV) mit einer Referenzspannung (EC) verglichen wird, wobei die Spannungsdifferenz (DV) die Differenz zwischen einer Ausgangsspannung (V0) einer Stromquelle, wenn der Ladevorgang angehalten wird, und einer Akkumulatorspannung (VB) ist,
beim Ladevorgang eine Ladespannung auf eine Spannung (V01) umgeschaltet wird, die größer ist als die Ausgangsspannung (VO) der Stromquelle, und
nachdem der Abschluss des Ladevorgangs ermittelt wurde, basierend auf dem Ergebnis des Vergleichs, die Ladespannung auf die Ausgangsspannung (VO) der Stromquelle umgeschaltet wird.

4. Ladeverfahren gemäß Anspruch 3, wobei der Ladevorgang abgeschlossen wird, nachdem ein Vergleichsergebnis, das den Abschluss des Ladeprozesses anzeigt, mindestens zweimal erkannt wird.

## Revendications

1. Appareil de chargement (100) destiné à commander un processus de chargement de manière telle qu'un accumulateur (101) soit chargé initialement en utilisant un courant constant et en utilisant une tension de charge inférieure ou égale à une première tension et, lorsque la tension aux bornes dudit accumulateur s'élève jusqu'à ladite première tension, l'accumulateur est chargé en utilisant une tension constante et en utilisant un courant de charge inférieur ou égal audit courant constant, l'appareil de chargement comprenant :
un moyen de commutation (102) destiné à couper périodiquement le courant de charge ;
**caractérisé en ce qu'**un moyen de comparaison (105) est prévu pour comparer une différence de tension (ΔV) avec une tension de référence (EC), ladite différence de tension (ΔV) étant la différence entre une tension de sortie (V0) d'une source de puissance lorsque le courant de charge est coupé et une tension d'accumulateur (VB) ; et
un moyen de commande (107 ; 108) destiné à commander la tension de charge jusqu'à une tension (V01) supérieure à la tension de sortie (V0) de ladite source de puissance lorsque ledit courant de charge est délivré, commuter la tension de charge jusqu'à une tension (V0) égale à la tension de sortie (V0) de la source de puissance lorsque ledit courant de charge est coupé, et commuter la tension de charge jusqu'à une tension (V0) égale à la tension de sortie (V0) de la source de puissance lorsque le chargement est fini, conformément à une sortie du moyen de comparaison (105).

2. Appareil selon la revendication 1, dans lequel ledit moyen (107) de commande finit le processus de chargement après que la sortie du de comparaison indique un achèvement du processus de chargement au moins deux fois.

3. Procédé de commande de chargement d'un accumulateur (101), le procédé comprenant les étapes consistant à :
charger initialement l'accumulateur en utilisant un courant constant et en utilisant une tension de charge inférieure ou égale à une première tension et, lorsque la tension aux bornes dudit accumulateur s'élève jusqu'à ladite première tension, charger l'accumulateur en utilisant une tension constante et en utilisant un courant de charge inférieur ou égal audit courant constant,
dans lequel le chargement est arrêté périodiquement ;
**caractérisé en ce que** :
lorsque le chargement est arrêté, une différence de tension (ΔV) est comparée à une tension de référence (EC), ladite différence de tension (ΔV) étant la différence entre une tension de sortie (V0) d'une source de puissance lorsque le chargement est arrêté et une tension d'accumulateur (VB),
lors d'un chargement, une tension de charge est commutée jusqu'à une tension (V01) supérieure à la tension de sortie (V0) de la source de puissance, et
dès qu'un achèvement de chargement a été déterminé, sur la base du résultat de ladite comparaison, la tension de chargement est commutée jusqu'à ladite tension de sortie (V0) de la source de puissance.

4. Procédé de chargement selon la revendication 3, dans lequel le chargement est fini après qu'un résultat de comparaison indicatif d'un achèvement du processus de chargement a été détecté au moins deux fois.
